# EUROPEAN PATENT SPECIFICATION

(11) **EP 4 505 816 B1**
(45) Date of publication and mention of the grant of the patent: **25.11.2026**
(21) Application number: 23726718.2
(22) Date of filing: 27.04.2023
(51) Int. Cl.: H04W 74/0808, H04W 72/02, H04W 76/14

(54) **SIDELINK UNLICENSED PRIORITIES FOR CHANNEL ACCESS AND RESOURCE RESERVATION**
UNLIZENZIERTE SEITENLINK-PRIORITÄTEN FÜR KANALZUGRIFF UND RESSOURCENRESERVIERUNG
PRIORITÉS SANS LICENCE DE LIAISON LATÉRALE POUR ACCÈS À UN CANAL ET RÉSERVATION DE RESSOURCES

(30) Priority: 28.04.2022 US 202263336020 P
(43) Date of publication of application: 12.02.2025
(73) Proprietor: Huawei Technologies Co., Ltd., Shenzhen, Guangdong 518129 (CN)
(72) Inventor: CALCEV, George, Hoffman Estates, Illinois 60192 (US); CLASSON, Brian, St. Pete Beach, Florida 33706 (US); YUE, Guosen, Edison, New Jersey 08820 (US)
(74) Representative: MERH-IP Matias Erny Reichl Hoffmann Patentanwälte PartG mbB
(86) International application number: PCT/US2023/020218
(87) International publication number: WO 2023/130127

(56) References cited:
- WO-A1-2021/040501
- WO-A1-2021/212354
- US-A1- 2021 298 070

## Description

### TECHNICAL FIELD

The present disclosure relates generally to methods and apparatus for wireless communications, and, in particular embodiments, to methods and apparatus for sidelink (SL) unlicensed priorities for channel access and resource reservation.

### BACKGROUND

Support for vehicle to vehicle (V2V) and vehicle to everything (V2X) services has been introduced in LTE during Releases 14 and 15 to expand the 3GPP platform to the automotive industry (TR 36.885, TR 38.885). The work items (RP-152293, RP-172293) defined the LTE sidelink (SL) suitable for vehicular applications, and complementary enhancements to the cellular infrastructure. Examples of V2X use case scenarios include the following.
- Vehicles Platooning enables vehicles to dynamically form a platoon travelling together.
- Extended Sensors enable the exchange of raw or processed data gathered through local sensors or live video images among vehicles, road site units (RSU), devices of pedestrian, and V2X application servers.
- Advanced Driving enables semi-automated or full-automated driving.
- Remote Driving enables a remote driver or a V2X application to operate a remote vehicle for those passengers who cannot drive by themselves, or remote vehicles located in dangerous environments.
Document US 2021/298070 A1 relates to wireless communication methods that assist a user equipment (UE) in determining the channel access priority (CAPC) to use for a data radio bearer (DRB) on sidelink that includes multiple quality of service (QoS) flows for a transmission. The UE receives an indication from a base station (BS) regarding what CAPC to use, or determines the CAPC based on a rule. The UE maps the plurality of QoS flows to the DRB and transmits the QoS flows using the DRB and the selected CAPC.
Document WO 2021/212354 A1 relates to methods that includes: performing a channel access procedure based on a first channel access priority class (CAPC) value for initiating a channel occupancy time (COT) for transmitting data, wherein the first CAPC value is determined from a set of CAPC values based on a first priority level value of the data; and transmitting sidelink control information (SCI) within the COT, wherein the SCI indicates a subsequent time resource within the COT available for sidelink transmission.

### SUMMARY

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. Technical advantages are generally achieved, by embodiments of this disclosure which describe methods and apparatus for sidelink (SL) unlicensed priorities for channel access and resource reservation.

According to embodiments, a user equipment (UE) initiates a channel occupancy time (COT) following a successful listen before talk (LBT) procedure. The UE transmits to a second UE COT information indicating that the COT is sharable. The UE transmits a sidelink (SL) transmission in an unlicensed band within the COT.

In some embodiments, to transmit the COT information, the UE may transmit to the second UE the COT information in a sidelink control information (SCI).

In some embodiments, the COT information may further indicate an energy detection threshold (EDT) for sharing the COT and a remaining duration of the COT. In some embodiments, the EDT and the remaining duration of the COT may be indicated in additional fields in SCI Format 2.

The COT information may further indicate at least one of: that the first UE extends transmission at an end of the SL transmission during a guard symbol of an SL slot or that the second UE should extend a second transmission of the second UE during a last guard symbol of the SL slot.

In some embodiments, the first UE may receive from the second UE a second transmission of the second UE. The second transmission is started during a last guard symbol of a precedent slot.

According to embodiments, a user equipment (UE) obtains a PC5 5QI (PQI), where PC5 refers to a reference point where the UE directly communicates with another UE over a direct channel and 5QI refers to a 5G quality of service (QoS) indicator. The UE converts the PQI to a channel access priority class (CAPC). The UE performs a listen before talk (LBT) procedure based on the CAPC. The UE transmits a sidelink (SL) transmission in an unlicensed band based on a result of the LBT procedure.

In some embodiments, to obtain the PQI, the UE may obtain the PQI from an upper layer of the UE. In some embodiments, the upper layer may be an application layer.

In some embodiments, the UE may convert the PQI to an SL priority. The UE may determine candidate SL resources in a selection window based on the SL priority. The UE may select an SL resource from the candidate SL resources for the SL transmission.

In some embodiments, the converting the PQI to the CAPC may be based on a pre-configured mapping table mapping from PQI values to CAPC values. In some embodiments, the pre-configured mapping table may include a first mapping from at least one of PQI values of 21, 22, 23, 55, 90, or 91 to a CAPC value of 1 and a second mapping a PQI value 59 to a CAPC value of 3.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1A illustrates an example communications system 100, according to embodiments;
FIG. 1B shows examples of SL UEs in coverage, partial coverage, and OOC, according to some embodiments;
FIG. 2 shows basic sensing and resource selection timing, according to some embodiments;
FIGs. 3A and 3B show an example of a channel access procedure using Type 1 transmission, according to some embodiments;
FIG. 4 illustrates an example of Mode 1 SL operations, according to some embodiments;
FIG. 5 shows an example of Mode 2 SL operations, according to some embodiments;
FIG. 6 shows an example of selection window transmissions that share the same COT, according to some embodiments; and
FIG. 7 shows an example of a first COT initiation with transmission failure of a first UE and a second UE initiating a second COT transmissions, according to some embodiments;
FIG. 8 shows an example of SL slot with PSFCH, according to some embodiments;
FIG. 9A shows a flowchart for COT that allows SL transmission during the guard symbol, according to some embodiments;
FIG. 9B shows a flowchart for SL transmission without a guard symbol conditioned by an existing following reservation, according to some embodiments;
FIG. 10A shows a flow chart of a method performed by a UE for SL unlicensed priorities for channel access and resource reservation, according to some embodiments;
FIG. 10B shows a flow chart of a method performed by a UE for SL COT sharing, according to some embodiments;
FIG. 11 illustrates an example communication system, according to some embodiments;
FIGs. 12A and 12B illustrate example devices that may implement the methods and teachings according to this disclosure; and
FIG. 13 is a block diagram of a computing system that may be used for implementing the devices and methods disclosed herein.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

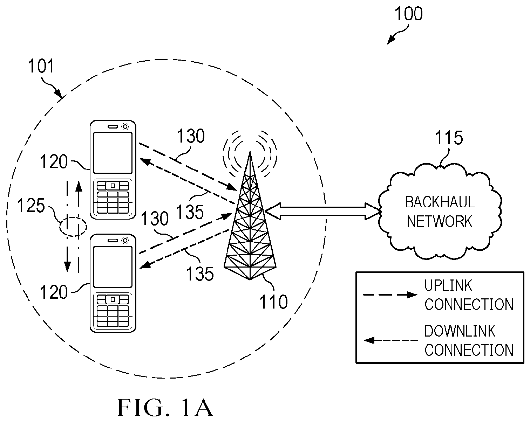

FIG. 1A illustrates an example communications system 100, according to some embodiments. Communications system 100 includes an access node 110 serving user equipments (UEs) with coverage 101, such as UEs 120. In a first operating mode, communications to and from a UE passes through access node 110 with a coverage area 101. The access node 110 is connected to a backhaul network 115 for connecting to the internet, operations and management, and so forth. In a second operating mode, communications to and from a UE do not pass through access node 110, however, access node 110 typically allocates resources used by the UE to communicate when specific conditions are met. Communications between a pair of UEs 120 can use a sidelink connection (shown as two separate one-way connections 125). In FIG. 1A, the sideline communication is occurring between two UEs operating inside of coverage area 101. However, sidelink communications, in general, can occur when UEs 120 are both outside coverage area 101, both inside coverage area 101, or one inside and the other outside coverage area 101. Communication between a UE and access node pair occur over uni-directional communication links, where the communication links between the UE and the access node are referred to as uplinks 130, and the communication links between the access node and UE is referred to as downlinks 135.

Access nodes may also be commonly referred to as Node Bs, evolved Node Bs (eNBs), next generation (NG) Node Bs (gNBs), master eNBs (MeNBs), secondary eNBs (SeNBs), master gNBs (MgNBs), secondary gNBs (SgNBs), network controllers, control nodes, base stations, access points, transmission points (TPs), transmission-reception points (TRPs), cells, carriers, macro cells, femtocells, pico cells, and so on, while UEs may also be commonly referred to as mobile stations, mobiles, terminals, users, subscribers, stations, and the like. Access nodes may provide wireless access in accordance with one or more wireless communication protocols, e.g., the Third Generation Partnership Project (3GPP) long term evolution (LTE), LTE advanced (LTE-A), 5G, 5G LTE, 5G NR, sixth generation (6G), High Speed Packet Access (HSPA), the IEEE 802.11 family of standards, such as 802.11a/b/g/n/ac/ad/ax/ay/be, etc. While it is understood that communications systems may employ multiple access nodes capable of communicating with a number of UEs, only one access node and two UEs are illustrated for simplicity.

In Technical Specification Group (TSG) radio access network (RAN), a set of corresponding 5G RAN requirements, channel models, etc., for new radio (NR) have been defined.

Although NR sidelink was initially developed for V2X applications, there is growing interest in the industry to expand the applicability of NR sidelink to commercial use cases. For commercial sidelink applications, two requirements have been identified:
- (1) increased sidelink data rates, and
- (2) support of new carrier frequencies for sidelink.

Increased sidelink data rate is motivated by applications such as sensor information (e.g., video) sharing between vehicles with a high degree of driving automation. Commercial use cases could require data rates more than what is possible in Rel-17. Increased data rates can be achieved with the support of sidelink carrier aggregation and sidelink over unlicensed spectrum. Furthermore, by enhancing frequency range 2 (FR2) sidelink operation, increased data rates can be more efficiently supported on FR2. While the support of new carrier frequencies and larger bandwidths would also allow improvements to the data rate on the sidelink, the main benefit would come from making sidelink more applicable for a wider range of applications. More specifically, with the support of unlicensed spectrum and enhancements in FR2, the sidelink can likely be implemented in commercial devices since utilization of the intelligent transport systems (ITS) band is limited to ITS safety related applications.

There are two 3GPP defined resource allocation modes for sidelink resource allocation: Mode 1 and Mode2.

In Mode 1, the base station schedules SL resource(s) to be used by the UE for SL transmission(s). In Mode 1 (NR Uu link), the base station can assign NR SL resources for the cases of (i) a licensed carrier shared between NR Uu and NR SL (PC5 link); and (ii) a carrier dedicated to NR SL. Mode 1 may be used in coverage but cannot be used out-of-coverage. The following techniques are supported for resource allocation Mode 1 (in coverage):
- dynamic resource allocation, and
- configured grant Type 1 and Type 2.

In Mode 2, the UE determines (i.e., the base station does not schedule) SL transmission resource(s) within SL resources configured by the base station/network or pre-configured SL resources. Mode 2 may be used in coverage or out-of-coverage (OOC).

The definition of SL resource allocation Mode 2 covers the following:
a) the UE autonomously selects SL resource for transmission;
b) the UE assists SL resource selection for other UE(s), a functionality which can be part of a), c), d);
c) the UE is configured with NR configured grant (Type-1 like) for SL transmission; and
d) the UE schedules SL transmissions of other UEs.

Sensing- and resource (re-)selection-related procedures are supported for resource allocation Mode 2.

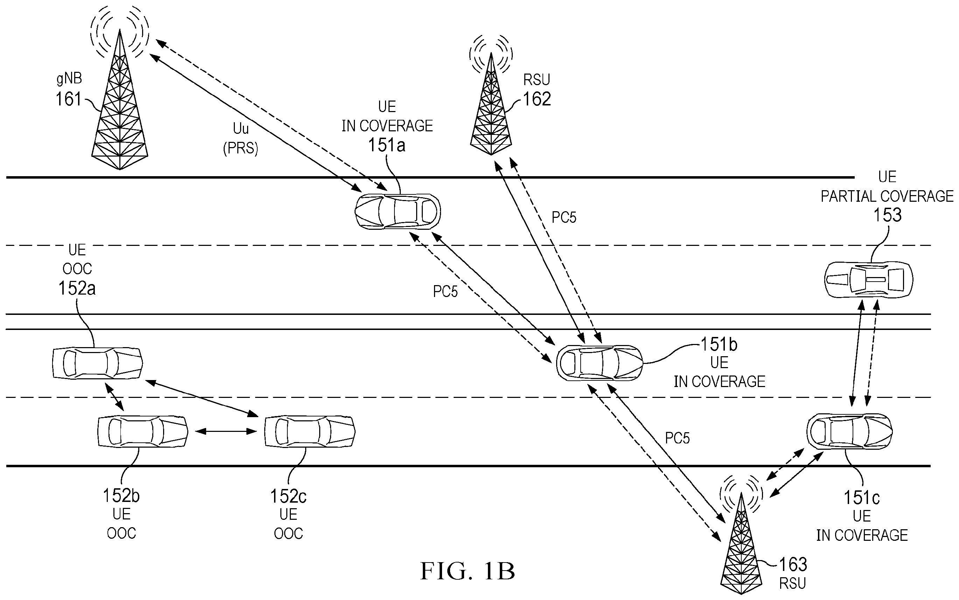

FIG. 1B shows examples of SL UEs in coverage, partial coverage, and out of coverage (OOC), according to some embodiments. The UE 151a is in the coverage of the gNB 161. The UE 151a and the gNB 161 can communicate with each other using the Uu interface. The UE 151b is in the coverage of the road side unit (RSU) 162 and the RSU 163 and can use the PC5 interface to communicate with the RSU 162 and/or the RUS 163. The UE 151c is in the coverage of the RSU 163.

The UEs 152a, 152b, and 152c are OOC SL UEs. Further, The UE 153 is in the partial coverage. The UEs can communicate with one another using the PC5 interface (e.g., between the UE 151a and the UE 151b).

Each transport block (TB) has an associated sidelink control information (SCI) message. The SCI is split in two stages: the 1^{st} -stage SCI that is carried in the Physical Sidelink Control Channel (PSCCH), and the 2^{nd} -stage SCI that is carried in Physical Sidelink Shared Channel (PSSCH).

A PSCCH may carry SCI. A source UE uses the SCI to schedule transmission of data on a PSSCH or reserve a resource for the transmission of the data on the PSSCH. The SCI may convey the time and frequency resources of the PSSCH, and/or parameters for hybrid automatic repeat request (HARQ) process, such as a redundancy version, a process id (or ID), a new data indicator, and/or resources for the Physical Sidelink Feedback Channel (PSFCH). The time and frequency resources of the PSSCH may be referred to as resource assignment or allocation and may be indicated in the time resource assignment field and/or a frequency resource assignment field (i.e., resource locations). The PSFCH carries HARQ feedback over the sidelink from a UE which is an intended recipient of a PSSCH transmission to the UE which performed the transmission.

HARQ feedback is called HARQ-ACK. The HARQ-ACK carries ack or nack indicating whether a destination UE decoded or not the payload carried on the PSSCH correctly. The SCI may also carry a bit field indicating or identifying the source UE. In addition, the SCI may carry a bit field indicating or identifying the destination UE. The SCI may further include other fields to carry information such as a modulation coding scheme used to encode the payload and modulate the coded payload bits, a demodulation reference signal (DMRS) pattern, antenna ports, a priority of the payload (transmission), and so on. A sensing UE performs sensing on a sidelink (i.e., receiving a PSCCH sent by another UE), and decoding SCI carried in the PSCCH to obtain information of resources reserved by another UE, and determining resources for sidelink transmissions of the sensing UE.

The sensing procedure is defined as decoding SCI(s) from other UEs and/or SL measurements. Decoding SCI(s) in this procedure provides at least information on SL resources indicated by the UE transmitting the SCI. The sensing procedure uses a L1 SL RSRP measurement based on SL DMRS when the corresponding SCI is decoded. The resource (re-)selection procedure considered uses the results of the sensing procedure to determine resource(s) for SL transmission.

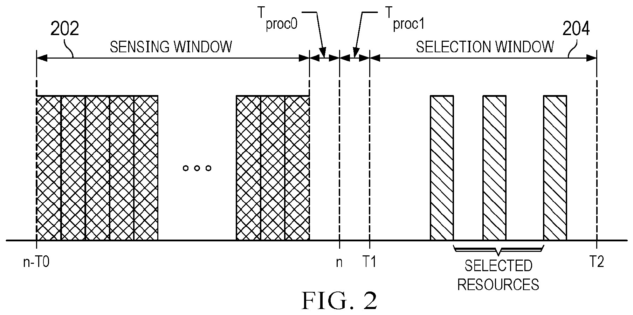

The basic sensing and resource selection timing is illustrated in FIG. 2, according to some embodiments. T_{proc,o} is the time required for a UE to complete the sensing process, and T_{proc,1} is the maximum time required for a UE to identify candidate resources and select new sidelink resources.

During the sensing window 202, an SL UE decodes the SCI(s) from other UEs and performs SL measurements. Among the information provided by the 1^{st} stage of SCI format carried in PSSCH (SCI Format 1-A) (TS 38.212), there are:
- Priority - 3 bits as specified in clause 5.4.3.3 of (12, TS 23.287) and clause 5.22.1.3.1 of (8, TS 38.321). Value '000' of the Priority field corresponds to priority value '1', value '001' of the Priority field corresponds to priority value '2', and so on. A lower priority value corresponds to a higher priority, and a higher priority value corresponds to a lower priority.
- Frequency resource assignment
- Time resource assignment
- Resource reservation period
- DMRS pattern
- 2^{nd} stage SCI format, and/or
- Number of DMRS ports, Modulation Coding Scheme (MCS).
The Priority Level is used to select for which PC5 service data the QoS requirements are prioritized such that a PC5 service data packet with Priority Level value N is prioritized over a PC5 service data packet having higher Priority Level values (i.e., N+1, N+2, etc.), with the lower number meaning higher priority.

The PC5 priority level (also known as SL reservation priority, data priority (where data priority defines reservation priority), or SL priority) provided in the SCI is used for determining the subset of resources to be reported to higher layers in PSSCH resource selection in sidelink resource allocation mode 2.

To trigger this procedure, in slot n, the higher layer provides the following parameters for this PSSCH/PSCCH transmission:
- the resource pool from which the resources are to be reported;
- L1 priority, prio_{TX};
- the remaining packet delay budget;
- the number of sub-channels to be used for the PSSCH/PSCCH transmission in a slot, L_{subCH};
- optionally, the resource reservation interval, P_{rsvp_TX}, in units of msec.
- If the higher layer requests the UE to determine a subset of resources from which the higher layer will select resources for PSSCH/PSCCH transmission as part of re-evaluation or pre-emption procedure, the higher layer provides a set of resources (r₀, r₁, r₂, ...) which may be subject to re-evaluation and a set of resources (r₀',r₁',r₂',...) which may be subject to pre-emption.
- It is up to UE implementation to determine the subset of resources as requested by higher layers before or after the slot rᵢ" - T₃, where rᵢ" is the slot with the smallest slot index among (r₀,r₁,r₂,...) and (r₀',r₁',r₂',...), and T₃ is equal to ${T}_{proc , 1}^{SL}$, where ${T}_{proc , 1}^{SL}$ is defined in slots in Table 8.1.4-2 where µ_{SL} is the SCS configuration of the SL Bandwidth Part (BWP).
- Optionally, the indication of resource selection mechanism(s), as allowedResourceSelectionConfig, which may comprise of full sensing only, partial sensing only, random resource selection only, or any combination(s) thereof.

During the sensing procedure, a monitoring UE detects SCI transmitted in each SL slot in the sensing window 202 and measures reference signal received power (RSRP) of the resource indicated in the SCI. A monitoring UE may also receive transmissions of data (also be a receiving UE) while sensing. For periodic traffic, the resource reservations for sidelink transmissions, if a UE occupies a resource on slot sₖ, it will also occupy the resource on slot sₖ+q*RRIₘ where q is an integer, RRIₘ is resource reservation interval for UEₘ that the sensing UE detected. Detecting includes the steps of receiving and decoding the PSCCH and processing the SCI within the PSCCH.

For aperiodic or dynamic transmissions, the transmitting UE reserves multiple resources and indicates the next resource in the SCI. Therefore, based on the sensing results, a monitoring UE can determine which resources may be occupied in the future and can avoid them for its own transmission if the measured RSRP on the occupied resource is larger than a RSRP threshold during the sensing period.

When resource selection is triggered on slot n in FIG. 2, based on sensing results in the sensing window 202 (i.e., on slots [n-T₀, n-T_{proc,0}]), the transmitting UE selects the resources in the resource selection window 204 (i.e., on slots [n+T₁, n+T₂]), where
T₀: number of slots with the value determined by resource pool configuration;
T_{proc,0}: time required for a UE to complete the sensing process;
T₁: processing time required for identification of candidate resources and resource selection T₁ ≤T_{proc,1};
T₂: the last slot of resource pool for resource selection which is left to UE implementation but in the range of [T_{2min,}PDB] where T₂ₘᵢₙ is minimum value of T₂ and PDB denotes packet delay budget, the remaining time for UE transmitting the data packet;
T_{proc,1}: maximum time required for a UE to identify candidate resources and select new sidelink resources.

To select a resource, the transmitting UE needs to identify the candidate resources by excluding the occupied resources with measured RSRP over a configured RSRP threshold. Then, the transmitting UE compares the ratio of the available resources over all resources in the selection window 204.

If the available resource ratio is greater than a threshold X%, then UE selects a resource randomly among the candidate resources.

The SL priority level is used to decide upon the available resource ratio as follows. If the ratio is smaller, the transmitting UE then increases the RSRP threshold by 3dB and checks the available resource ratio until the available resource ratio is equal to or greater than X%, where X is chosen from a list, *sl-TxPercentageList,* and its value is determined by data priority (SL priority level): *sl-TxPercentageList:* internal parameter *X* for a given *prio_{TX}* is defined as *sl-TxPercentageList* (*prio_{TX}*) converted from percentage to a ratio.

The possible values of X in *sl-TxPercentageList* are 20, 35, and 50 (which correspond to 20%, 35%, and 50%, respectively), as specified in TS38.331 below:

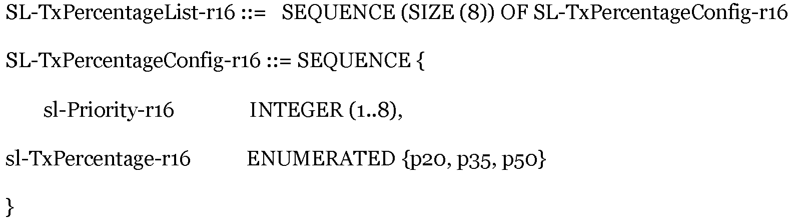

NR channel access procedures in shared (unlicensed) spectrum are defined in TS 37.213. The document defines several types for channel access based on Listen Before Talk (LBT). A device (UE) before transmitting may execute a channel assessment (CA) sensing to determine if the channel is idle or used. If the channel is determined as idle, some channel access schemes may require that a random backoff procedure follows the initial CA.

The SL resource selection takes place in two steps. In the first step, the sidelink specification in shared spectrum (SL-U) UE monitors the sensing window 202 and based on the decoded SCI and measured RSRP constructs the candidate resource list from the resource candidates in the selection window 204, as described above. The candidate resource list is then provided to the upper layer. In the second step, the upper layer selects from the candidate resource list the list of selected resources, which is provided to the PHY layer.

It is worth mentioning that in the selection window 204 definition in FIG. 2, selection of *T*₁ is up to UE implementation under $0 \leq {T}_{1} \leq {T}_{proc , 1}^{SL}$.

The set *S_{A}*, used for candidate selection, is initialized to the set of all the candidate single-slot resources.

The UE shall exclude any candidate single-slot resource *R*_{x,y} from the set *S_{A}* if it meets all the following conditions:
- the UE has not monitored slot $t {′}_{m}^{SL}$;
- for any periodicity value allowed by the higher layer parameter *sl-ResourceReservePeriodList* and a hypothetical SCI format 1-A received in slot $t {′}_{m}^{SL}$ with '*Resource reservation period*' field set to that periodicity value and indicating all subchannels of the resource pool in this slot, it overlaps with an existing reservation in the selection window 204.

Congestion control in SL is used to limit the access and avoid the possible collisions. For this purpose, two measures are defined in TS 38.215.
- Channel Busy Ratio (CBR): measured in slot n is defined as the portion of sub-channels in the resource pool whose SL RSSI measured by the UE exceed a (pre-)configured threshold sensed over a CBR measurement window [n-a, n-1],
- Channel Occupancy Ratio (CR): evaluated at slot n is defined as the total number of sub-channels used for its transmissions in slots [n-a, n-1] and granted in slots [n, n+b] divided by the total number of configured sub-channels in the transmission pool over [n-a, n+b].

The higher layer via IE SL-CBR-PriorityTxConfigList indicates the mapping between PSSCH transmission parameter (such as MCS, PRB number, retransmission number, CR limit) sets by using the indexes of the configurations provided in sl-CBR-PSSCH-TxConfigList, CBR ranges by an index to the entry of the CBR range configuration in sl-CBR-RangeConfigList, and priority ranges.

Thus, the CR and CBR are used to:
- select the number of HARQ retransmissions from the allowed numbers, if configured by Radio Resource Control (RRC), in sl-MaxTxTransNumPSSCH included in sl-PSSCH-TxConfigList and, if configured by RRC, overlapped in sl-MaxTxTransNumPSSCH indicated in sl-CBR-PriorityTxConfigList for the highest priority of the logical channel(s) allowed on the carrier and the CBR measured by lower layers,
- select an amount of frequency resources within the range, if configured by RRC, between sl-MinSubChannelNumPSSCH and sl-MaxSubchannelNumPSSCH included in sl-PSSCH-TxConfigList and, if configured by RRC, overlapped between MinSubChannelNumPSSCH and MaxSubchannelNumPSSCH indicated in sl-CBR-PriorityTxConfigList for the highest priority of the logical channel(s) allowed on the carrier and the CBR measured by lower layers,
- select a MCS which is, if configured, within the range, if configured by RRC, between sl-MinMCS-PSSCH and sl-MaxMCS-PSSCH associated with the selected MCS table included in sl-PSSCH-TxConfigList and, if configured by RRC, overlapped between sl-MinMCS-PSSCH and sl-MaxMCS-PSSCH associated with the selected MCS table indicated in sl-CBR-PriorityTxConfigList for the highest priority of the sidelink logical channel(s) in the MAC PDU and the CBR measured by lower layers.

Congestion Control is defined for each transmission pool as:
∘ Step 1: Configuration parameters are in place. NOTE: Parameters can be pre-configured or received via a network.
∘ Step 2: Receive upper layer packet with its associated Prose Per Packet Priority (PPPP).
∘ Step 3: Determine the PDB for this packet for this PPPP value, from configuration.
∘ Step 4: Compute the current CBR.
∘ Step 5: Compute CRlimit for this PPPP based on the CBR.
∘ Step 6: Select transmit resources for the packet such that can meet the CR limit.

Where Channel occupancy Ratio (CR) limit values corresponding to CBR measured range are defined in Table 1 as follows. CR limit or CRlimit is a limit on the maximum channel occupancy ratio.

**Table 1 (CR limit values)**

| **CBR-based PSSCH transmission parameter configuration** | **PPPP1-PPPP2** | **PPPP3-PPPP5** | **PPPP6-PPPP8** |
|---|---|---|---|
| **CBR measured** | **CR limit** | **CR limit** | **CR limit** |
| 0 ≤ CBR measured ≤ 0,3 | No limit | No limit | No limit |
| 0,3 < CBRmeasured ≤ 0,65 | No limit | 0,03 | 0,02 |
| 0,65 < CBR measured ≤ 0,8 | 0,02 | 0,006 | 0,004 |
| 0,8 < CBR measured ≤ 1 | 0,02 | 0,003 | 0,002 |

Inter-UE coordination (IUC) is a part of SL design to deal with hidden node problem and half-duplex constraints. For IUC, three categories of resources are identified.
- Preferred Resource(s) excludes those resource(s) overlapping with reserved resource(s) indicated by a received SCI format 1-A whose RSRP measurement is higher than an RSRP threshold (i.e., resources including those reserved by a received SCI whose RSRP is lower than RSRP threshold).
- Non-preferred Resources include:
   ∘ resources due to half-duplex UE is supposed to receive on those resources or
   ∘ resources indicated by a SCI format 1-A that satisfies at least one of the following:
      ▪ the RSRP measurement performed, for the received (SCI format 1-A), is higher than some threshold Th(prio_RX ) where prio_RX is the value of the priority field in the received (SCI format 1-A); or
      ▪ the UE is a destination UE of a TB associated with the received (SCI format 1-A) and the RSRP measurement performed for the received (SCI format 1-A), is lower than Th'(prio_RX ) where prio_RX is the value of the priority field in the received (SCI format 1-A).
      Note 1: The sets of preferred and non-preferred resource(s) are different for the transmitter and receiver, as they reflect a local view.
   Note 2: The assumption is that the transmit reservation of UE-A are already known by UE-B and excluded from the selection window
- Conflicted Resources:
   ∘ Reservations overlap via a second strong SCI *> Th*(*prio*₂*, prio*₁)*,* here *prio*₂*, prio*₁ are in the received SCIs;
   ∘ UE is destination of two reservations |RSRP1-RSRP2|> (pre-)configured threshold;
   ∘ Reservations that overlap with half-duplex situations.
NR Channel Access in Shared Spectrum

Licensed exempt spectrum, also known as unlicensed spectrum, attracted a lot of interest from cellular operators in the last years. LTE-LAA (licensed assisted access) was specified in 3GPP LTE releases 13 and 14. More recently in new radio unlicensed (NR-U), the operation in unlicensed spectrum (shared spectrum) was specified in release 16 (TS 38.213).

3GPP and IEEE technologies operating in unlicensed spectrum use Listen Before Talk (LBT) channel access. In certain regions such European Union and Japan, the LBT rule is enforced by the spectrum regulators to reduce the interference risk and to offer a fair coexistence mechanism. The LBT mechanism requires the transmitter to check before a transmission to see if there are other occupants of the channel and postpone the transmission if the channel is occupied.

In particular, the LBT rule for 5GHz band uses Clear Channel Assessment (CCA) to determine if the channel is available for transmission. CCA checks if the energy received is above a threshold. If the energy detected exceeds the CCA threshold, the channel is considered in use (busy), otherwise is considered idle. If the channel is idle, the transmitter can transmit for a duration of channel occupancy time (COT) at a bandwidth at least e.g. 80% of the total channel bandwidth. The maximum COT duration for a transmission burst can be referenced to ETSI EN 301893. The maximum COT (MCOT) duration is a function of channel access priority class (CAPC). For determining a Channel Occupancy Time (COT), if a transmission gap is less than or equal to 25us, the gap duration is counted in the channel occupancy time. A transmission burst is defined as a set of transmissions with gaps no more than 16us; if the gaps are larger than 16us, the transmissions are considered separate.

There may be several types of channel access for downlink (DL) and respectively uplink (UL). Type 1 UL channel access procedure

This clause describes channel access procedures by a UE where the time duration spanned by the sensing slots that are sensed to be idle before a UL transmission(s) is random. The clause is applicable to the following transmissions:
- PUSCH/SRS transmission(s) scheduled or configured by eNB/gNB, or
- PUCCH transmission(s) scheduled or configured by gNB, or
- Transmission(s) related to random access procedure.

A UE may transmit the transmission using Type 1 channel access procedure after first sensing the channel to be idle during the slot durations of a defer duration *T_{d}*, and after the counter *N* is zero in step 4. The counter N is adjusted by sensing the channel for additional slot duration(s) according to the steps described below.
1) set *N = Nᵢₙᵢₜ*, where *Nᵢₙᵢₜ* is a random number uniformly distributed between 0 and *CWₚ*, and go to step 4;
2) if *N* > 0 and the UE chooses to decrement the counter, set *N = N - 1;*
3) sense the channel for an additional slot duration, and if the additional slot duration is idle, go to step 4; else, go to step 5;
4) if *N* = 0, stop; else, go to step 2;
5) sense the channel until either a busy slot is detected within an additional defer duration *T_{d}* or all the slots of the additional defer duration *T_{d}* are detected to be idle;
6) if the channel is sensed to be idle during all the slot durations of the additional defer duration *T_{d}*, go to step 4; else, go to step 5.

If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*.

The defer duration *T_{d}* consists of duration *T_{f}* = 16us immediately followed by *mₚ* consecutive slot durations where each slot duration is *Tₛₗ* = 9us, and *T_{f}* includes an idle slot duration *Tₛₗ* at start of *T_{f}*.

*CW_{min,p}* ≤ *CWₚ* ≤ *CW_{max,p}* is the contention window. *CWₚ* adjustment is described in clause 4.2.2.
*CW_{min, p}* and *CWₘₐₓ, ₚ* are chosen before step 1 of the procedure above.

*mₚ, CW_{min, p}*, and *CW_{max,p}* are based on a channel access priority class *p* as shown in Table 4.2.1-1, that is signalled to the UE.
Type 2 UL channel access procedure

This clause describes channel access procedures by UE where the time duration spanned by the sensing slots that are sensed to be idle before a UL transmission(s) is deterministic.

If a UE is indicated by an eNB to perform Type 2 UL channel access procedures, the UE follows the procedures described in the clause ("Type 2A UL channel access procedure") below.
Type 2A UL channel access procedure

If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25us. *T*_{short_ul} consists of a duration *T_{f}* = 16us immediately followed by one sensing slot and *T_{f}* includes a sensing slot at start of *T_{f}.* The channel is considered to be idle for *T*_{short_ul} if both sensing slots of *T*_{short_ul} are sensed to be idle.
Type 2B UL channel access procedure

If a UE is indicated to perform Type 2B UL channel access procedures, the UE uses Type 2B UL channel access procedure for a UL transmission. The UE may transmit the transmission immediately after sensing the channel to be idle within a duration of *T_{f}* = *16us. T_{f}* includes a sensing slot that occurs within the last 9us of *T_{f}.* The channel is considered to be idle within the duration *T_{f}* if the channel is sensed to be idle for total of at least 5*us* with at least 4us of sensing occurring in the sensing slot.
Type 2C UL channel access procedure

If a UE is indicated to perform Type 2C UL channel access procedures for a UL transmission, the UE does not sense the channel before the transmission. The duration of the corresponding UL transmission is at most 584us.

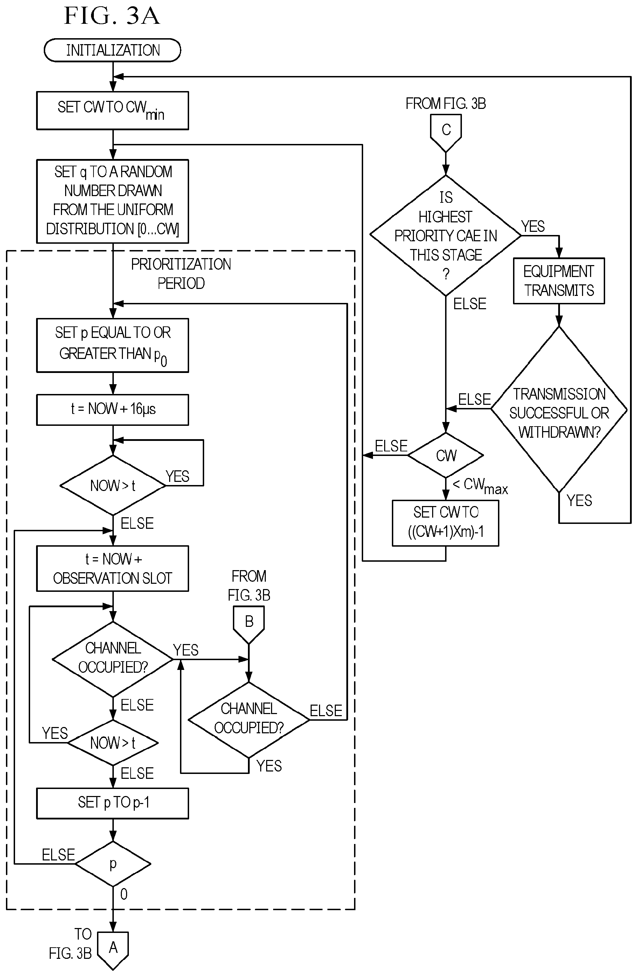

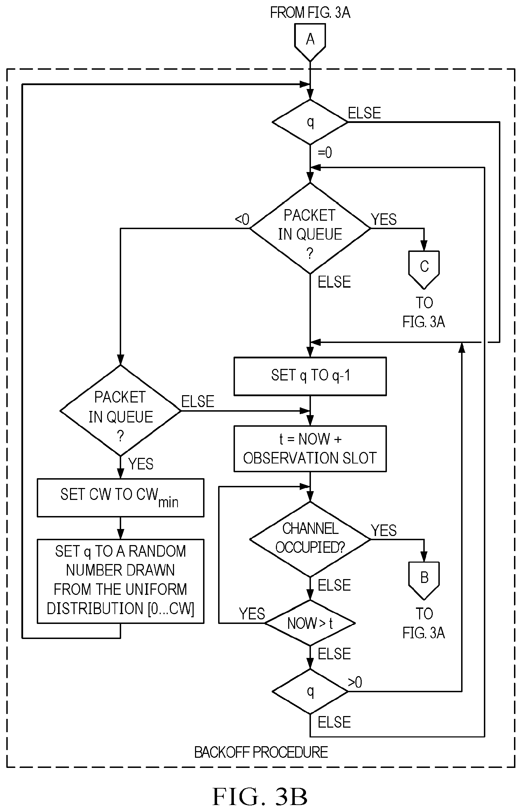

Based on the flowchart in FIGs. 3A and 3B, a UE transmits, using Type 1, the channel access procedure after first sensing the channel to be idle during the sensing slot duration of a defer duration *Td,* and after the counter *N* is zero. The counter *N* is initialized with a random value larger than minimum contention window (CWₘᵢₙ) and smaller than maximum contention window value (CWₘₐₓ) and decremented when sensing the channel idle for additional sensing slot duration(s) *Ts*. The values of CWₘᵢₙ and CWₘₐₓ are based on the channel access priority class (CAPC) that is signaled to UE. After the successful LBT procedure, a device may continuously transmit without another LBT procedure for the maximum channel occupancy time (COT), which is also based on CAPC.

The total *Channel Occupancy Time* of autonomous uplink transmission(s) obtained by the channel access procedure in this clause, including the following DL transmission if the UE sets 'COT sharing indication' in AUL-UCI to '1' in a subframe within the autonomous uplink transmission(s), shall not exceed *T_{ulm cot, p}*, where *T_{ulm cot, p}* is given in Table 2 below.

**Table 2**

| Channel Access Priority Class (***p***) | ***mₚ*** | ***CW*_{*min*, *p*}** | ***CW_{max, p}*** | ***T_{ulm cot, p}*** | allowed ***CWₚ*** sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511, 1023} |
| 4 | 7 | 15 | 1023 | 6ms or 10 ms | {15,31,63,127,255,511, 1023} |
| NOTE1: For *p* = 3,4, *T*_{*ulm cot*, *p*} = 10*ms* if the higher layer parameter | | | | | |
| *absenceOfAnyOtherTechnology-r14* or *absenceOfAnyOtherTechnology-*r16 is provided, otherwise, *T_{ulm cot, p}* = 6*ms.* | | | | | |
| NOTE 2: When *T_{ulm cot, p}* = 6ms it may be increased to 8*ms* by inserting one or more gaps. The minimum duration of a gap shall be 100*us.* The maximum duration before including any such gap shall be 6*ms*. | | | | | |

When using a higher CAPC, a device on average accesses the channel faster (due to the limit of CWₘₐₓ), and for a shorter duration (due to the maximum COT duration, ***T_{ulm cot, p}***). A lower CAPC value means higher priority, and a higher CAPC value means lower priority.

The Channel Access Priority Classes (CAPC) of radio bearers and media access control (MAC) control elements (CEs) are either fixed or configurable:
- fixed to the lowest priority for the padding buffer status reporting (BSR) and recommended bit rate MAC CEs;
- fixed to the highest priority for signalling radio bearer (SRB)0, SRB1, SRB3 and other MAC CEs;
- configured by the gNB for SRB2 and data radio bearer (DRB).

When choosing the CAPC of a DRB, the gNB considers the 5G QoS Indicators (5QIs) of all the QoS flows multiplexed in that DRB while considering fairness between different traffic types and transmissions. The table below shows which CAPC should be used for which standardized 5QIs (i.e., which CAPC to use for a given QoS flow).

A QoS flow corresponding to a non-standardized 5QI (i.e., operator specific 5QI) should use the CAPC of the standardized 5QI which best matches the QoS characteristics of the non-standardized 5QI.

A 5QI is a scalar that is used as a reference to 5G QoS characteristics, i.e. access node-specific parameters that control QoS forwarding treatment for the QoS Flow (e.g. scheduling weights, admission thresholds, queue management thresholds, link layer protocol configuration, etc.). Standardized 5QI values have one-to-one mapping to a standardized combination of 5G QoS characteristics, which can be referenced to Table 5.7.4-1 of TS 23.501 V17.4.0 (2022-03).

**Table 3 below shows the mapping between CAPCs and 5QIs (a lower CAPC means a higher priority).**

| **CAPC** | **5QI** |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: lower CAPC value means higher priority | |

Table 3 When performing Type 1 LBT for the transmission of an uplink TB (see TS 37.213, clause 4.2.1.1) and when the CAPC is not indicated in the DCI, the UE shall select the CAPC as follows:
- if only MAC CE(s) are included in the TB, the highest priority CAPC of those MAC CE(s) is used; or
- if common control channel (CCCH) service data unit(s) (SDU(s)) are included in the TB, the highest priority CAPC is used; or
- If dedicated control channel (DCCH) SDU(s) are included in the TB, the highest priority CAPC of the DCCH(s) is used; or
- The lowest priority CAPC of the logical channel(s) with MAC SDU multiplexed in the TB is used otherwise.

When a UE uses Type 1 channel access procedures for physical uplink shared channel (PUSCH) transmissions on configured resource, the UE determines the corresponding UL channel access priority *p* in Table 4.2.1-1 of 3GPP TS 38.300.

When a UE uses Type 1 channel access procedures for PUSCH transmissions with user plane data indicated by a UL grant or related to random access procedure where the corresponding UL channel access priority *p* is not indicated, the UE determines *p* in Table 4.2.1-1 of 3GPP TS 38.300 following the same procedures as for PUSCH transmission on configured resources using Type 1 channel access procedures.

The CAPC values are provided to UE via ChannelAccess-CPext field in downlink control information (DCI) Format 0_0, DCI Format 0_1 and Format 0_2, Format 1_0, Format 1_1 and Format 1_2 as defined in TS 38.212.

DCI format 0_1 is used for the scheduling of one or multiple PUSCH in one cell or indicating CG downlink feedback information (CG-DFI) to a UE. DCI format 0_2 and DCI format 0_0 are used for the scheduling of PUSCH in one cell.

DCI format 1_0 is used for the scheduling of PDSCH in one DL cell. DCI format 1_1 is used for the scheduling of one or multiple PDSCH in one cell. DCI format 1_2 is used for the scheduling of PDSCH in one cell.

TS 38.212 specifies the allowed entries for channel access values for dynamic and semi-static modes.

The flowchart of channel access based on the CAPC (p) is defined in ETSI 301.893, Annex F, and show here in FIGs. 3A and 3B.

In the current systems, there is no sidelink specification in shared spectrum. (SL-U).

It is expected that the SL-U follows the NR-U channel access specified in TS 37.213. Moreover, it is expected that that SL-U reuses as much as possible the SL resource allocation methods. First, CAPC are not defined for all possible values of SL priorities used for resource reservation, and the other way around. Thus, one possible issue that may occur when the CAPC for unlicensed channel access and SL resource priority are used independently and based on the existing specs is that some combinations of CAPC and SL priority may be inconsistent. For instance, it may happen that a CAPC class of high priority (for instance 1) is used to access a reservation made with a SL resource reservation low priority (for instance 8), and the other way around. This may lead to unfair channel access and resource allocation, which may be detrimental to QoS for different flows.

In some examples, for the SL the application of video sharing for cooperative collision avoidance (PQI=90), the SL priority is quite high (3 on scale 1-8), and the delay is critical (packet delay budget of 10ms). If the corresponding CAPC entry used for the video sharing is the video buffer streaming (5QI =4) will translate into undesirable lower priority and higher latency for channel access respectively CAPC=4 and 300ms delay bound.

For Mode 1 resource allocation, one issue is that the DCI format 3_0 does not provide the necessary parameters for SL unlicensed access, for instance CAPC. DCI format 3_0 is defined in TS 38.212 and is used for scheduling of NR PSCCH and NR PSSCH in one cell. DCI format 3_1 is defined in the same document and is used for scheduling of LTE PSCCH and LTE PSSCH in one cell.

For Mode 2 resource allocation, one issue is that CAPC and SL Priority Level does not cover the same type of traffic. The problem to be solved is to accommodate different types of priorities (for channel access and resource selection).

Another technical issue addressed by this disclosure is the signaling of CAPC and SL priority level for SL-U.

This disclosure proposes channel access support and signaling required for SL-U UE operation for Mode 1 and Mode 2. In this disclosure, the term SL-U UE may be used to identify a sidelink (SL) UE that operates in unlicensed (shared) spectrum.

First, regarding the usage of the CAPC and SL priorities, they are used for different purposes and have different time scales.

The CAPC is used for LBT sensing COT maximum duration. The timing for LBT (based on CAPC values) is very short on the order of tens to no more than few hundreds of microseconds for 5GHz bands, which may be equivalent one or few OFDM symbols duration. For instance, when CAPC =1, the LBT duration (when successful) corresponds to a sensing slot duration (9us) plus the backoff period duration (between 3x9 and 7x9 us), (i.e.), less than 73us. The subcarrier spacing values of {15, 30, 60, 120} kHz correspond to the OFDM symbol duration of {66.7, 33.3, 16.7, 8.33} us.

The purpose of SL resource reservation is to reserve some resources for future transmissions. These reservations are made only in the SL resources (which is a subset of UL resources when sidelink and uplink are on the same carrier), and the reservations are decoded and respected only by the SL UE devices, which can decode sidelink control information (SCI). The reservation methodology is specified by 3GPP and followed only by the 3GPP devices that implement this feature. The channel access however (based on CAPC) is mandated for any type of device (thus non-3GPP) that operate in EU 5GHz unlicensed bands and is specified by ETSI.

The durations of SL resource reservation windows are much longer than the channel access LBT. The SL sensing window is up to 100 ms, while the resource selection window duration is T2-T1 (FIG. 2) where T1 can be as low as zero and T2 min include {1,5, 10, 20} * 2^mu slots, where mu values {0,1,2,3} correspond to SCS values of {15, 30, 60, 120} kHz. This results in T2 min values equivalent to {1, 5, 10, 20} ms.

In some embodiments, the CAPC table, which is based on 5QI, may be extended and include PQI values. One example of such extension is presented in Table 4 below.

**Table 4**

| **CAPC** | **5QI** | **PQI** |
|---|---|---|
| 1 | 1, 3, 5, 65, 66, 67, 69, 70, 79, 80, 82, 83, 84, 85 | 21, 23, 55,90,91, |
| 2 | 2,7,71 | 22,57, |
| 3 | 4, 6, 8, 9, 72, 73, 74, 76 | 56, 59 |
| 4 | - | |
| NOTE: lower CAPC value means higher priority | | |

The extension provided here, or other possible similar extensions may map together to the same CAPC value, 5QI and PQI values that correspond to similar or close QoS requirements, such as packet delay budget, maximum packet error rate, flow category (guaranteed bit rate (GBR), non-GBR, delay-critical GBR).

In some embodiments, the mapping is not necessary one to one. For instance, PQI 22 may mapped to both CAPC 1 and CAPC2 and leave to the implementation which CAPC value is actually used for channel access.

In some embodiments, there may be a rule of mapping between the 5QI and PQI values. For instance, all the delay critical GBR traffic would correspond to the same CAPC value, similar for GBR while Non-GBR type of traffic would correspond to different CAPC values.

In some embodiments, CAPC values can be constrained to be available to be used or not available to be used for certain priority levels. For example, priority level 6, 7, or 8 traffic cannot use CAPC value 1, or priority levels higher than 3 are mapped to CAPC value 4, or some overlapping ranges of SL priority levels can be assigned to different CAPC values and leave for implementation the actual selection of CAPC when the channel access takes place.

In some embodiments, yet another rule may be considered where CAPC values would correspond to the most significant 2 bits (MSB) of the SL priority level, which is encoded in 3-bit field. For instance, CAPC 1 may correspond to (000, 001) values of (0, and 1) SL priorities. CAPC 2 may correspond to SL priorities 2 and 3 (010, 011 binary).

Yet in some other embodiments, the mapping between CAPC values and SL priority levels may be provided via (pre-)configuration as indices in a table entry.

In some embodiments, the PHY layer may be provided with both CAPC and SL Priority Level via scheduling downlink control information (DCI) or a radio resource Control (RRC) configuration.

For each transmission, SL-U UE uses CAPC to gain channel access, and for each resource selection corresponding to that transmission, the SL-U UE uses the corresponding SL Priority Level.

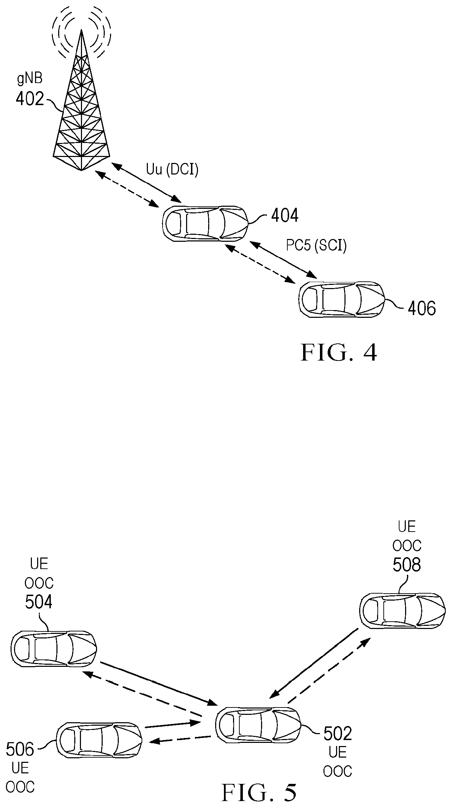

FIG. 4 shows an example of Mode 1 SL operations, according to some embodiments. In Mode 1 of the SL operations, the gNB 402 allocates SL resources over Uu link via DCI. The resources are used by a SL-U UE (e.g., the UE 404) for exchange over PC5 link with another SL-U UE (e.g., UE 406). For Mode 1 of operation in a an embodiment, the DCI dedicated for SL-U resources also carries the CAPC priority for SL unlicensed access or an index to the table that maps CAPC to 5QI and PQI values.

For instance, the DCI format 3_0 can be extended to cover the SL-U allocations for Mode 1 with a bit field dedicated to CAPC when the resource pool index indicates a shared spectrum transmission. In another embodiment, the DCI may have a bit field that indicates that the resource pool index is used for shared spectrum access.

In a different embodiment, the gNB 402 via DCI could provide the channel occupancy duration (COT) that SL-U UE (e.g., the UE 404) may use for transmissions. This COT may be shorter than the maximum COT allowed by the provided CAPC channel access rules.

COT is specific to shared spectrum (unlicensed) channel access.

A UE may or may not be required to perform an LBT prior to its transmissions that take place either at a reserved resource or without reservation.

The list below shows examples where transmissions may not require a LBT procedure (channel sensing):
- if there is a short control transmission (with a short duration as specified by 3GPP NR-U and ETSI BRAN specs) (Type 2C);
- if there is a transmission in a shared COT that immediately follows another transmission in the same COT.

The list below shows examples where transmissions may require LBT procedure (channel sensing):
- when transmission requires to initiate a COT (Type 1);
- when transmission in in a shared COT with a gap with respect to previous transmission (for instance Type 1, Type 2 A, Type 2B).

In the following section, the SL UE that initiated COT (e.g., initiating UE) is the SL UE that successfully executes a Type 1 LBT followed by a transmission, which is not done in a shared COT. The UE that initiates a COT may or may not share its COT with other UEs. Those UEs that share a COT with the initiating UE may be called "responder UEs".

In addition, in Mode 1, DCI format 3_0 used for SL-U resource allocation may indicate if the SL-U UE transmission should be in SL-U UE initiated COT or may be in a shared COT transmission. The DCI also could indicate the energy detection threshold (EDT) that SL-U UE should use for its LBT procedure when it initiates a COT or the EDT when SL-U UE uses a shared COT.

For instance, in DCI format 3_0, the gNB 402 may provide two EDT values, one that a COT initiator uses for channel sensing when it initiates a COT, and another EDT that the SL-U UE COT initiator provides to a SL-U UE responder for COT sharing purposes.

FIG. 5 shows an example of Mode 2 SL operations, according to some embodiments. In Mode 2, the SL-U UE (e.g., the UE 502) autonomously selects resources for transmission and may assist other SL-U UEs (e.g., the UEs 504, 506, and/or 508) for their resource selection (for instance using IUC). For this mode the priority level for channel access (CAPC) is derived by SL-U UE by the method proposed above. The upper layers provide the lower layer the CAPC value for the channel access.

The COT sharing is also supported in Mode 2. In this mode, the important information for COT sharing is provided in SCI.

In the following section the solutions for COT sharing for SL are provided for different resource reservations and LBT outcomes.

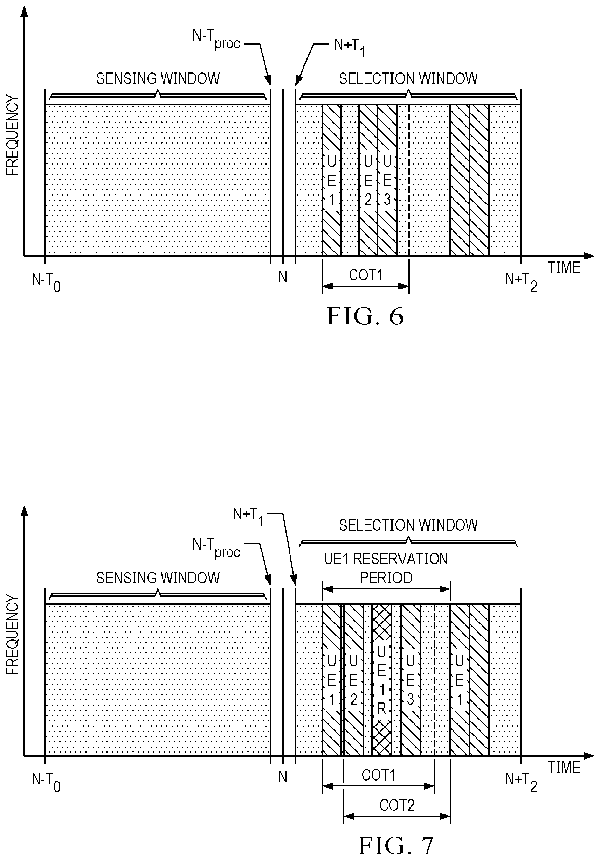

FIG. 6 shows an example of selection window transmissions that share the same COT, according to some embodiments. In FIG. 6, following a successful LBT, UE1 initiates a COT and informs UE2 and UE3 that the COT may be shared, as well as the EDT required for sharing COT and the remaining of COT duration. UE2 may share the UE1 initiated COT, and it is not required for the UE2 to start its own COT. However, depending on the gap duration, it may be required to execute a LBT procedure prior to transmission. If the gap is short (e.g., less than 16us between UE1 and UE 2 transmissions), the LBT procedure is not required. If the gap is between 16 to 25 us, the UE2 LBT may be shorter (LBT Type 2). If the gap is larger than 25 us, a LBT Type 1 may be required while sharing the COT. These LBTs for COT sharing will use the EDT indicated by the COT initiator. UE3 shares the same COT as UE2 and UE1. However because UE3's transmissions take place immediately after the UE2 transmission, it does not need to perform LBT. Still, UE3 may need to listen to the channel to make sure that the UE2 transmission takes place as it was supposed to and not cancelled due to a failed LBT.

Examples of possible gaps between UE1 and UE2 can be one or more slots, or a single symbol if UE1 transmission carries a PSFCH which is followed by a flexible symbol.

If a LBT fails, below are a few possible scenarios.
1) If there is already reservation for retransmissions, the UE may wait for the next opportunity to retransmit and decides if the retransmission is done in a new initiated COT or shared COT of an existing COT.
2) If there are no reservations, a new reservation may be necessary or a transmission without reservation (opportunistic) takes place if there are unreserved resources.

For the second scenario, there may be a limited time for the retransmission required by the packet budget delay. For instance, suppose that there is a configured grant periodic transmission with some resources periodically reserved. If one of the transmissions fails due to LBT failure, the transmitter UE may have some new defined Retransmit Time Limit to find resources to retransmit. If these resources are not found, the transmitter UE may need to wait for the next configured grant period. The packet delay budget is be larger than the duration from the packet arrival at the PHY layer to the first reserved resource (initial transmission), and the Retransmit Time Limit during which retransmissions of the initial transmission may take place.

FIG. 7 shows an example of a first COT initiation with transmission failure of a first UE and a second UE initiating a second COT transmissions, according to some embodiments. In FIG. 7, UE1 transmission may fail due to LBT, therefore the first COT (COT1) cannot be initiated. UE2 may initiate a second COT (COT2) which is a shared COT. UE1 may try to retransmit if there is a non-occupied reserved resource (UE1R) prior to Retransmit Time Limit expiration from the initial UE1 attempt. If such opportunity is not found, the next transmission opportunity may be next grant period. The packet delay budget is in general less than 31 slots the limit of Selection Window.

When a SL-U UE initiates a COT, it may inform the responder device the COT remaining duration via one or more fields in SCI format 2 if indicated in a higher layer parameter. The SCI also may indicate that the COT is allowed to be shared or not. In addition, when indicated by higher layers, the SL-U UE may indicate via SCI format 2 an EDT value that should be used by the responder device for COT sharing purposes.

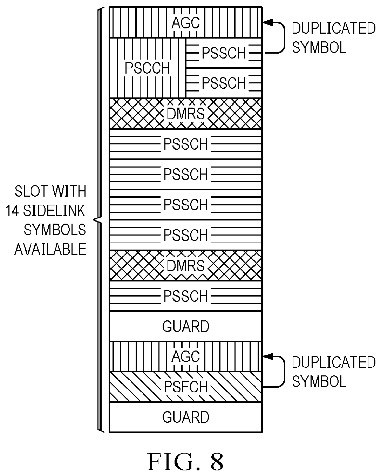

FIG. 8 shows an example of SL slot with PSFCH, according to some embodiments. FIG. 8 shows that the SL slot is ending with a guard symbol where there is no transmission. Therefore, it may seem that always there is a time gap (of one slot) between two consecutive transmissions. To avoid the LBT procedure between consecutive transmissions, embodiments in this disclosure provide the following solutions, which are based on transmitting during the guard symbol to avoid gaps.

When the same SL UE reserves two or more consecutive slots for consecutive transmissions, the SL UE may retransmit in the last one symbol of the previous symbols such that will avoid the gap.

When the SL UE reserves (schedules) a PSFCH transmission prior to the last symbol (as in FIG. 8), the initiating SL UE may indicate to the responder SL UE that the initiating SL UE will transmit PSFCH to extend its transmission during the guard symbol so a continuity of transmissions to the next slot is achieved.

In a different embodiment, when a SL UE that initiates a COT shares a COT with a responder SL UE it may indicate to the responder SL UE either the initiating SL UE extends transmission at the end of its transmission during its guard symbol, or the responder SL UE should extend its transmission at the end of its slot during the guard symbol.

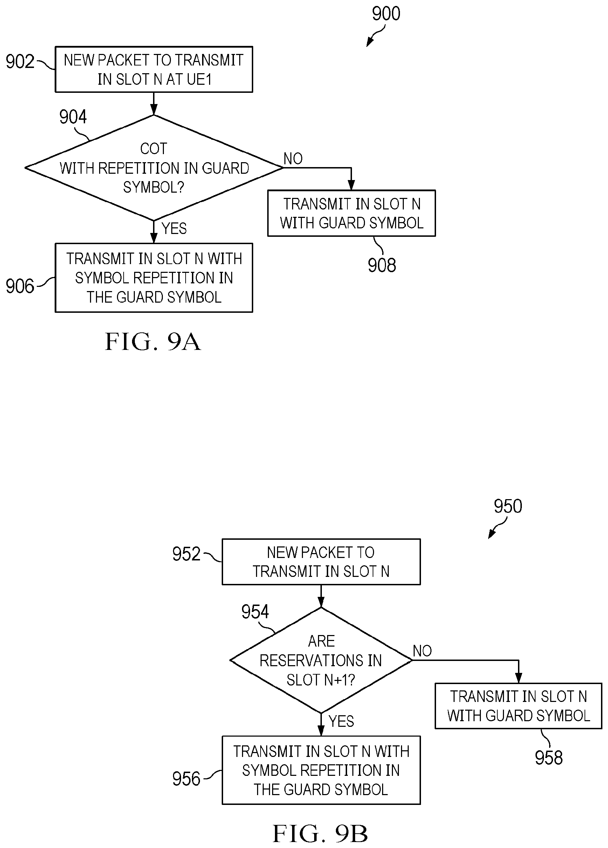

FIG. 9A shows a flowchart 900 for COT that allows SL transmission during the guard symbol, according to some embodiments. At the operation 902, a new packet to transmit in slot N arrives at the SL UE (UE1). At the operation 904, UE1 determines whether the COT is with repetition in the guard symbol. If so, at the operation 906, UE1 transmits in slot N with repetition in the guard symbol of slot N. If not, at the operation 908, UE transmits in slot N with the guard symbol of slot N.

FIG. 9B shows a flowchart 950 for SL transmission without a guard symbol conditioned by an existing following reservation, according to some embodiments. At the operation 952, a new packet to transmit in slot N arrives at the SL UE (UE1). At the operation 954, UE1 determines whether there are reservations in slot N. If so, at the operation 956, UE1 transmits in slot N with symbol repetition in the guard symbol of slot N. If not, at the operation 958, UE transmits in slot N with the guard symbol of slot N.

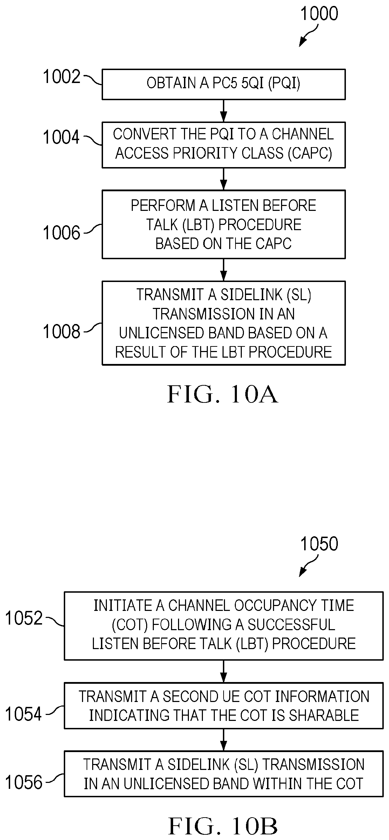

FIG. 10A shows a flow chart of a method 1000 performed by a UE for sidelink (SL) unlicensed priorities for channel access and resource reservation, according to some embodiments. The UE may include computer-readable code or instructions executing on one or more processors of the UE. Coding of the software for carrying out or performing the method 1000 is well within the scope of a person of ordinary skill in the art having regard to the present disclosure. The method 1000 may include additional or fewer operations than those shown and described and may be carried out or performed in a different order. Computer-readable code or instructions of the software executable by the one or more processors may be stored on a non-transitory computer-readable medium, such as for example, the memory of the UE.

The method 1000 starts at the operation 1002, where the UE obtains a PC5 5QI (PQI). At the operation 1004, the UE converts the PQI to a channel access priority class (CAPC). At the operation 1006, the UE performs a listen before talk (LBT) procedure based on the CAPC. At the operation 1008, the UE transmits a sidelink (SL) transmission in an unlicensed band based on a result of the LBT procedure.

In some embodiments, to obtain the PQI, the UE may obtain the PQI from an upper layer of the UE. In some embodiments, the upper layer may be an application layer.

In some embodiments, the UE may convert the PQI to an SL priority. The UE may determine candidate SL resources in a selection window based on the SL priority. The UE may select an SL resource from the candidate SL resources for the SL transmission.

In some embodiments, the converting the PQI to the CAPC may be based on a mapping table mapping from PQI values to CAPC values. The mapping table may be pre-configured to UE locally or configured by a network device (e.g. base station) via a control message such as RRC when the UE accesses the network. In some embodiments, the mapping table may include a first mapping from at least one of PQI values of 21, 22, 23, 55, 90, or 91 to a CAPC value of 1 and a second mapping a PQI value 59 to a CAPC value of 3.

When the UE performs the LBT procedure based on the CAPC, the QoS parameters of Table 2 can be used to meet channel access requirements.

FIG. 10B shows a flow chart of a method 1050 performed by a UE for sidelink (SL) COT sharing, according to some embodiments. The UE may include computer-readable code or instructions executing on one or more processors of the UE. Coding of the software for carrying out or performing the method 1050 is well within the scope of a person of ordinary skill in the art having regard to the present disclosure. The method 1050 may include additional or fewer operations than those shown and described and may be carried out or performed in a different order. Computer-readable code or instructions of the software executable by the one or more processors may be stored on a non-transitory computer-readable medium, such as for example, the memory of the UE.

The method 1050 starts at the operation 1052, where the UE initiates a channel occupancy time (COT) following a successful listen before talk (LBT) procedure. At the operation 1054, the UE transmits to a second UE COT information indicating that the COT is sharable. At the operation 1056, the UE transmits, a sidelink (SL) transmission in an unlicensed band within the COT.

In some embodiments, to transmit the COT information, the UE may transmit to the second UE the COT information in a sidelink control information (SCI).

In some embodiments, the COT information may further indicate an energy detection threshold (EDT) for sharing the COT and a remaining duration of the COT. In some embodiments, the EDT and the remaining duration of the COT may be indicated in one or more fields in SCI Format 2.

In some embodiments, the COT information may further indicate at least one of: that the first UE extends transmission at an end of the SL transmission during a guard symbol of an SL slot or that the second UE should extend a second transmission of the second UE during a last guard symbol of the SL slot.

In some embodiments, the first UE may receive from the second UE a second transmission of the second UE. The second transmission is started during a last guard symbol of a precedent slot.

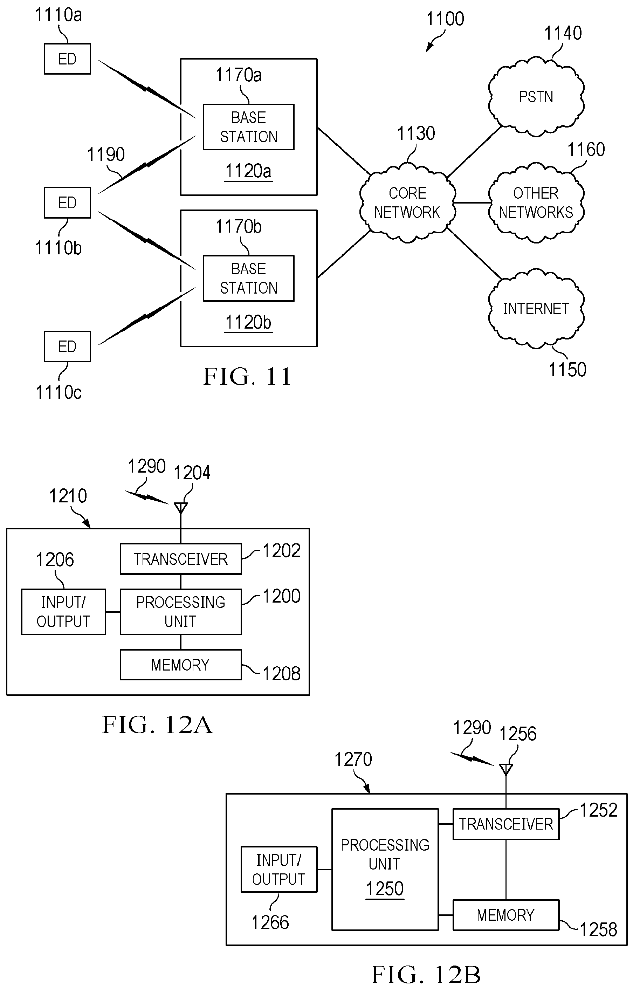

FIG. 11 illustrates an example communication system 1100, according to some embodiments. In general, the system 1100 enables multiple wireless or wired users to transmit and receive data and other content. The system 1100 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 1100 includes electronic devices (ED) 1110a-1110c, radio access networks (RANs) 1120a-1120b, a core network 1130, a public switched telephone network (PSTN) 1140, the Internet 1150, and other networks 1160. While certain numbers of these components or elements are shown in FIG. 11, any number of these components or elements may be included in the system 1100.

The EDs 1110a-1110c are configured to operate or communicate in the system 1100. For example, the EDs 1110a-1110c are configured to transmit or receive via wireless or wired communication channels. Each ED 1110a-1110c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 1120a-1120b here include base stations 1170a-1170b, respectively. Each base station 1170a-1170b is configured to wirelessly interface with one or more of the EDs 1110a-1110c to enable access to the core network 1130, the PSTN 1140, the Internet 1150, or the other networks 1160. For example, the base stations 1170a-1170b may include (or be) one or more of several well-known devices, such as a base transceiver station (BTS), a Node-B (NodeB), an evolved NodeB (eNodeB), a Next Generation (NG) NodeB (gNB), a Home NodeB, a Home eNodeB, a site controller, an access point (AP), or a wireless router. The EDs 1110a-1110c are configured to interface and communicate with the Internet 1150 and may access the core network 1130, the PSTN 1140, or the other networks 1160.

In the embodiment shown in FIG. 11, the base station 1170a forms part of the RAN 1120a, which may include other base stations, elements, or devices. Also, the base station 1170b forms part of the RAN 1120b, which may include other base stations, elements, or devices. Each base station 1170a-1170b operates to transmit or receive wireless signals within a particular geographic region or area, sometimes referred to as a "cell." In some embodiments, multiple-input multiple-output (MIMO) technology may be employed having multiple transceivers for each cell.

The base stations 1170a-1170b communicate with one or more of the EDs 1110a-1110c over one or more air interfaces 1190 using wireless communication links. The air interfaces 1190 may utilize any suitable radio access technology.

It is contemplated that the system 1100 may use multiple channel access functionality, including such schemes as described above. In particular embodiments, the base stations and EDs implement 5G New Radio (NR), LTE, LTE-A, or LTE-B. Of course, other multiple access schemes and wireless protocols may be utilized.

The RANs 1120a-1120b are in communication with the core network 1130 to provide the EDs 1110a-1110c with voice, data, application, Voice over Internet Protocol (VoIP), or other services. Understandably, the RANs 1120a-1120b or the core network 1130 may be in direct or indirect communication with one or more other RANs (not shown). The core network 1130 may also serve as a gateway access for other networks (such as the PSTN 1140, the Internet 1150, and the other networks 1160). In addition, some or all of the EDs 1110a-1110c may include functionality for communicating with different wireless networks over different wireless links using different wireless technologies or protocols. Instead of wireless communication (or in addition thereto), the EDs may communicate via wired communication channels to a service provider or switch (not shown), and to the Internet 1150.

Although FIG. 11 illustrates one example of a communication system, various changes may be made to FIG. 11. For example, the communication system 1100 could include any number of EDs, base stations, networks, or other components in any suitable configuration.

FIGs. 12A and 12B illustrate example devices that may implement the methods and teachings according to this disclosure. In particular, FIG. 12A illustrates an example ED 1210, and FIG. 12B illustrates an example base station 1270. These components could be used in the system 1100 or in any other suitable system.

As shown in FIG. 12A, the ED 1210 includes at least one processing unit 1200. The processing unit 1200 implements various processing operations of the ED 1210. For example, the processing unit 1200 could perform signal coding, data processing, power control, input/output processing, or any other functionality enabling the ED 1210 to operate in the system 1100. The processing unit 1200 also supports the methods and teachings described in more detail above. Each processing unit 1200 includes any suitable processing or computing device configured to perform one or more operations. Each processing unit 1200 could, for example, include a microprocessor, microcontroller, digital signal processor, field programmable gate array, or application specific integrated circuit.

The ED 1210 also includes at least one transceiver 1202. The transceiver 1202 is configured to modulate data or other content for transmission by at least one antenna or NIC (Network Interface Controller) 1204. The transceiver 1202 is also configured to demodulate data or other content received by the at least one antenna 1204. Each transceiver 1202 includes any suitable structure for generating signals for wireless or wired transmission or processing signals received wirelessly or by wire. Each antenna 1204 includes any suitable structure for transmitting or receiving wireless or wired signals. One or multiple transceivers 1202 could be used in the ED 1210, and one or multiple antennas 1204 could be used in the ED 1210. Although shown as a single functional unit, a transceiver 1202 could also be implemented using at least one transmitter and at least one separate receiver.

The ED 1210 further includes one or more input/output devices 1206 or interfaces (such as a wired interface to the Internet 1150). The input/output devices 1206 facilitate interaction with a user or other devices (network communications) in the network. Each input/output device 1206 includes any suitable structure for providing information to or receiving information from a user, such as a speaker, microphone, keypad, keyboard, display, or touch screen, including network interface communications.

In addition, the ED 1210 includes at least one memory 1208. The memory 1208 stores instructions and data used, generated, or collected by the ED 1210. For example, the memory 1208 could store software or firmware instructions executed by the processing unit(s) 1200 and data used to reduce or eliminate interference in incoming signals. Each memory 1208 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIG. 12B, the base station 1270 includes at least one processing unit 1250, at least one transceiver 1252, which includes functionality for a transmitter and a receiver, one or more antennas 1256, at least one memory 1258, and one or more input/output devices or interfaces 1266. A scheduler, which would be understood by one skilled in the art, is coupled to the processing unit 1250. The scheduler could be included within or operated separately from the base station 1270. The processing unit 1250 implements various processing operations of the base station 1270, such as signal coding, data processing, power control, input/output processing, or any other functionality. The processing unit 1250 can also support the methods and teachings described in more detail above. Each processing unit 1250 includes any suitable processing or computing device configured to perform one or more operations. Each processing unit 1250 could, for example, include a microprocessor, microcontroller, digital signal processor, field programmable gate array, or application specific integrated circuit.

Each transceiver 1252 includes any suitable structure for generating signals for wireless or wired transmission to one or more EDs or other devices. Each transceiver 1252 further includes any suitable structure for processing signals received wirelessly or by wire from one or more EDs or other devices. Although shown combined as a transceiver 1252, a transmitter and a receiver could be separate components. Each antenna 1256 includes any suitable structure for transmitting or receiving wireless or wired signals. While a common antenna 1256 is shown here as being coupled to the transceiver 1252, one or more antennas 1256 could be coupled to the transceiver(s) 1252, allowing separate antennas 1256 to be coupled to the transmitter and the receiver if equipped as separate components. Each memory 1258 includes any suitable volatile or non-volatile storage and retrieval device(s). Each input/output device 1266 facilitates interaction with a user or other devices (network communications) in the network. Each input/output device 1266 includes any suitable structure for providing information to or receiving/providing information from a user, including network interface communications.

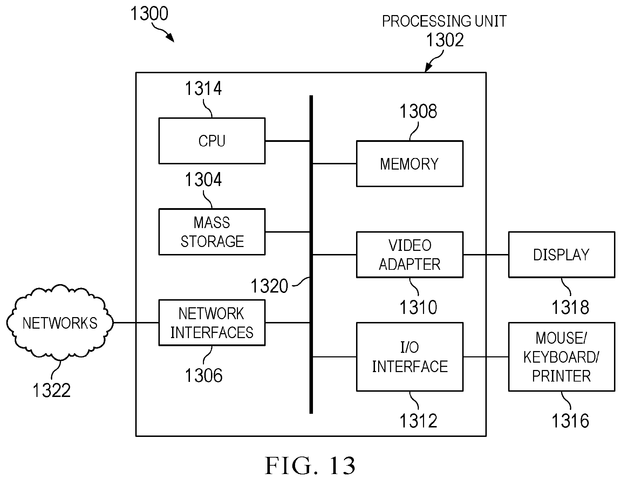

FIG. 13 is a block diagram of a computing system 1300 that may be used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1300 includes a processing unit 1302. The processing unit includes a central processing unit (CPU) 1314, memory 1308, and may further include a mass storage device 1304, a video adapter 1310, and an I/O interface 1312 connected to a bus 1320.

The bus 1320 may be one or more of any type of several bus architectures including a memory bus or memory controller, a peripheral bus, or a video bus. The CPU 1314 may comprise any type of electronic data processor. The memory 1308 may comprise any type of non-transitory system memory such as static random access memory (SRAM), dynamic random access memory (DRAM), synchronous DRAM (SDRAM), read-only memory (ROM), or a combination thereof. In an embodiment, the memory 1308 may include ROM for use at boot-up, and DRAM for program and data storage for use while executing programs.

The mass storage 1304 may comprise any type of non-transitory storage device configured to store data, programs, and other information and to make the data, programs, and other information accessible via the bus 1320. The mass storage 1304 may comprise, for example, one or more of a solid state drive, hard disk drive, a magnetic disk drive, or an optical disk drive.

The video adapter 1310 and the I/O interface 1312 provide interfaces to couple external input and output devices to the processing unit 1302. As illustrated, examples of input and output devices include a display 1318 coupled to the video adapter 1310 and a mouse, keyboard, or printer 1316 coupled to the I/O interface 1312. Other devices may be coupled to the processing unit 1302, and additional or fewer interface cards may be utilized. For example, a serial interface such as Universal Serial Bus (USB) (not shown) may be used to provide an interface for an external device.

The processing unit 1302 also includes one or more network interfaces 1306, which may comprise wired links, such as an Ethernet cable, or wireless links to access nodes or different networks. The network interfaces 1306 allow the processing unit 1302 to communicate with remote units via the networks. For example, the network interfaces 1306 may provide wireless communication via one or more transmitters/transmit antennas and one or more receivers/receive antennas. In an embodiment, the processing unit 1302 is coupled to a local-area network 1322 or a wide-area network for data processing and communications with remote devices, such as other processing units, the Internet, or remote storage facilities.

It should be appreciated that one or more steps of the embodiment methods provided herein may be performed by corresponding units or modules. The respective units or modules may be hardware, software, or a combination thereof. For instance, one or more of the units or modules may be an integrated circuit, such as field programmable gate arrays (FPGAs) or application-specific integrated circuits (ASICs).

## Claims

1. A method, comprising:
initiating (1052), by a first user equipment, UE, a channel occupancy time, COT, following a successful listen before talk, LBT, procedure;
transmitting (1054), by the first UE to a second UE, COT information indicating that the COT is sharable; and
transmitting (1056), by the first UE, a sidelink, SL, transmission in an unlicensed band within the COT,
wherein the COT information further indicating at least one of:
that the first UE extends transmission at an end of the SL transmission during a guard symbol of an SL slot, or
that the second UE should extend a second transmission of the second UE during a last guard symbol of the SL slot.

2. The method of claim 1, the transmitting the COT information comprising:
transmitting, by the first UE to the second UE, the COT information in sidelink control information, SCI.

3. The method of any of claims 1-2, the COT information further indicating an energy detection threshold, EDT, for sharing the COT and a remaining duration of the COT.

4. The method of claim 3, wherein the EDT and the remaining duration of the COT are indicated in one or more fields in SCI Format 2.

5. The method of any of claims 1-4, further comprising:
receiving, by the first UE from the second UE, a second transmission of the second UE, the second transmission started during a last guard symbol of a precedent slot.

6. A user equipment, UE, comprising:
means for performing the method according to any of claims 1-5.

7. A computer-readable storage medium comprising instructions which, when executed by the user equipment of claim 6, cause said user equipment to carry out the method according to any one of claims 1 to 5.

## Patentansprüche

1. Verfahren, umfassend:
Initiieren (1052), durch ein erstes Benutzergerät, UE, nachfolgend zu einem erfolgreichen Hören-vor-Sprechen-Prozess, LBT-Prozess, einer Kanalbelegungszeit, COT;
Übertragen (1054) von COT-Informationen, die anzeigen, dass die COT gemeinsam nutzbar ist, von dem ersten UE an ein zweites UE; und
Übertragen (1056), durch das erste UE, einer Sidelink-Übertragung, SL-Übertragung, in einem nicht lizenzierten Band innerhalb der COT,
wobei die COT-Informationen ferner mindestens eines anzeigen von:
dass das erste UE die Übertragung an einem Ende der SL-Übertragung während eines Überwachungssymbols eines SL-Slots verlängert, oder
dass das zweite UE eine zweite Übertragung des zweiten UE während eines letzten Überwachungssymbols des SL-Slots verlängern sollte.

2. Verfahren nach Anspruch 1, wobei das Übertragen der COT-Informationen umfasst:
Übertragen der COT-Informationen in Sidelink-Steuerinformationen, SCI, von dem ersten UE an das zweite UE.

3. Verfahren nach einem der Ansprüche 1 bis 2, wobei die COT-Informationen ferner einen Energieerkennungsschwellenwert, EDT, für ein gemeinsames Nutzen der COT und eine verbleibende Dauer der COT anzeigen.

4. Verfahren nach Anspruch 3, wobei der EDT und die verbleibende Dauer der COT in einem oder mehreren Feldern im SCI-Format 2 angezeigt werden.

5. Verfahren nach einem der Ansprüche 1 bis 4, das ferner umfasst:
Empfangen, in dem ersten UE von dem zweiten UE, einer zweiten Übertragung des zweiten UE, wobei die zweite Übertragung während eines letzten Überwachungssymbols eines vorhergehenden Slots gestartet wurde.

6. Benutzervorrichtung, UE, umfassend:
ein Element zum Durchführen des Verfahrens nach einem der Ansprüche 1 bis 5.

7. Computerlesbares Speichermedium, das Anweisungen umfasst, die, wenn sie von dem Benutzergerät nach Anspruch 6 ausgeführt werden, dass Benutzergerät veranlassen, das Verfahren nach einem der Ansprüche 1 bis 5 auszuführen.

## Revendications

1. Procédé comprenant :
l'initiation (1052), par un premier équipement utilisateur, UE, d'une durée d'occupation de canal, COT, à la suite d'une procédure d'écoute avant conversation, LBT, réussie ;
la transmission (1054), par le premier UE à un second UE, d'informations de COT indiquant que la COT peut être partagée ; et
la transmission (1056), par le premier UE, d'une transmission de liaison latérale, SL, dans une bande sans licence à l'intérieur de la COT,
les informations de COT indiquant en outre au moins une situation parmi :
que le premier UE étende la transmission à une fin de la transmission SL pendant un symbole de garde d'un créneau SL, ou
que le second UE doive étendre une seconde transmission du second UE pendant un dernier symbole de garde du créneau SL.

2. Procédé selon la revendication 1, la transmission des informations de COT comprenant :
la transmission, par le premier UE au second UE, des informations de COT dans des informations de commande de liaison latérale, SCI.

3. Procédé selon l'une quelconque des revendications 1 et 2, les informations de COT indiquant en outre un seuil de détection d'énergie, EDT, pour partager la COT et une durée restante de la COT.

4. Procédé selon la revendication 3, l'EDT et la durée restante de la COT étant indiquées dans un ou plusieurs champs dans le format SCI 2.

5. Procédé selon l'une quelconque des revendications 1 à 4, comprenant en outre :
la réception, par le premier UE en provenance du second UE, d'une seconde transmission du second UE, la seconde transmission ayant commencé lors d'un dernier symbole de garde d'un créneau précédent.

6. Équipement utilisateur, UE, comprenant :
des moyens pour réaliser le procédé selon l'une quelconque des revendications 1 à 5.

7. Support de stockage lisible par ordinateur comprenant des instructions qui, lorsqu'elles sont exécutées par l'équipement utilisateur selon la revendication 6, amènent ledit équipement utilisateur à mettre en œuvre le procédé selon l'une quelconque des revendications 1 à 5.
